(19) Europäisches Patentamt
European Patent Office
Office européen des brevets

(11) **EP 4 113 948 A1**

(12) **EUROPEAN PATENT APPLICATION**

(43) Date of publication:
04.01.2023 Bulletin 2023/01

(21) Application number: 22170236.8

(22) Date of filing: 27.04.2022

(51) International Patent Classification (IPC):
*H04L 45/00* (2022.01)     *H04L 45/74* (2022.01)
*H04L 45/745* (2022.01)     *H04L 49/00* (2022.01)

(52) Cooperative Patent Classification (CPC):
**H04L 45/54; H04L 45/742; H04L 45/745;
H04L 45/74591; H04L 49/3009**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.07.2021 JP 2021110233**

(71) Applicant: **FUJITSU LIMITED**
**Kawasaki-shi, Kanagawa 211-8588 (JP)**

(72) Inventor: **Hyoudou, Kazuki**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING DEVICE, CONTROL METHOD, AND CONTROL PROGRAM**

(57) An information processing device includes a field programmable gate array includes route information in flow control; and a forwarding processing unit that forwards packets according to the route information; one or more memories configured to store a flow cache that includes at least a part of the route information; and one or more processors configured to divide the route information into a plurality of division areas; and acquire hit information extracted from each of the entries in a first division area of the plurality of division areas to delete a part of entries of the flow cache stored in the one or more memories, the first division area including flows whose number is greater than a threshold value.

FIG. 1

**Description**

FIELD

The embodiments discussed herein are related to an information processing device, a control method, and a control program.

BACKGROUND

In recent years, network functions virtualization (NFV), which implements the functions of network equipment as software on a virtualization platform of a general-purpose server, has been known.

In NFV, a plurality of virtual network functions (VNFs) can be accommodated in one server, using server virtualization technique.

In NFV, communication between VNFs and communication between VNFs and external networks are relayed using virtual switches and virtual routers. Virtual relay devices such as virtual switches and virtual routers achieve the functions of switches and routers in networks, by software.

The virtual relay device is configured to forward a flow containing a plurality of packets and includes a relay unit and a control unit.

The relay unit is configured to forward the packet and sends the input packet to the forwarding destination based on relay rules. A set of relay rules registered in the relay unit may also be referred to as a flow cache.

The control unit controls the relay unit. The control unit, for example, registers an action-resolved rule in the flow cache of the relay unit according to a preset registration rule and the received packet and creates and deletes virtual ports in response to external instructions. The registration rule is, for example, a media access control (MAC) table, a routing table, an access control list (ACL), or a combination thereof.

In addition, in the virtual relay device, aging is performed on the flow (registration flow) registered in the relay rule.

In the aging, entries for which hits have not been made for a certain period of time are deleted (aged out) from the flow cache (relay rule) of the relay unit.

This removes undesired entries from the flow cache (relay rule) and streamlines lookups. In addition, in a virtualized environment, migration of virtual machines (VMs) and the like (host movement) will cause disadvantages such as being blocked from relaying properly to the original destination if relay rules before the movement continue to remain, but performing the aging also solves such disadvantages.

In NFV, the relay performance of the virtual relay device is important because the communication within the same host increases significantly compared with prior virtual environments due to the service chain or the like.

In a prior software-implemented virtual relay device, the packet relay itself involves a large amount of central processing unit (CPU) capability, which wastes computational resources that are originally expected be provided to applications. This makes it difficult to meet the performance requirements of NFV.

Thus, functions as a relay unit with heavy processing in the virtual relay device is offloaded to hardware such as a field programmable gate array (FPGA) and a smart network interface card (NIC). Offloading some functions achieved by software to hardware may also be referred to as hardware offload.

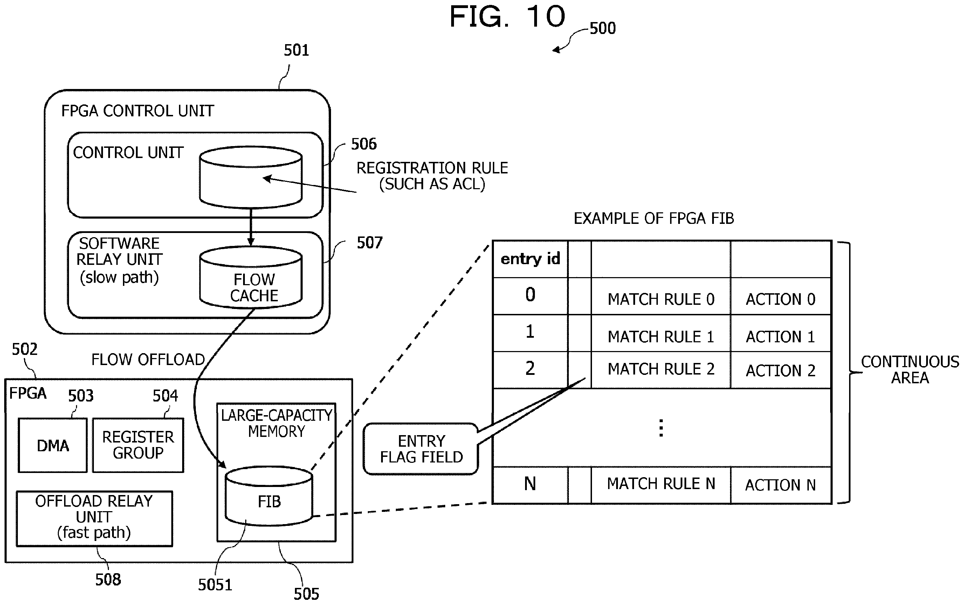

FIG. 10 is a diagram exemplarily illustrating a configuration of a prior hardware-offloaded virtual relay device.

This prior virtual relay device 500 illustrated in FIG. 10 includes an FPGA control unit 501 and an FPGA 502.

The virtual relay device 500 is achieved by a computer equipped with the FPGA 502.

The FPGA 502 achieves functions as a relay unit of a virtual relay device. For example, in the virtual relay device 500 illustrated in FIG. 10, the functions as a relay unit are hardware-offloaded to the FPGA 502.

The FPGA 502 includes a direct memory access (DMA) 503, a register group 504, an offload relay unit 508, and a large-capacity memory 505.

The DMA 503 forwards data from the FPGA 502 to the FPGA control unit 501 by DMA. The register group 504 stores various types of data generated in the FPGA 502.

The large-capacity memory 505 stores a forwarding information base (FIB) 5051. The FIB 5051 included in the FPGA 502 may also be referred to as an FPGA FIB 5051. Information on the flow cache of a software relay unit 507 is offloaded to the FPGA FIB 5051 (flow offload).

The FPGA FIB 5051 is information representing relay rules and is configured as a hash table reserved in a continuous area in the storage area of the large-capacity memory 505. The FPGA FIB 5051 illustrated in FIG. 10 is configured as a table whose entries have match rules, actions, and entry flag fields.

In the entry flag field, two-bit information made up of one-bit information (flag) representing valid or invalidity of the entry and one-bit information (flag) representing the presence or absence of a hit is recorded.

The match rule is information for identifying the flow, and for example, a combination of the input port identifier (ID) and the header information of the packet, or the like may also be used. The action is information indicating the handling of a packet that matches the match rule, in which, for example, forward or drop, designation of the output port, rewriting of header information, and the like are prescribed.

In the FPGA FIB 5051, the action is registered in association with the match rule. The offload relay unit 508, which will be described later, performs processing defined in the action for a packet of a flow corresponding to the match rule.

An entry ID (entry id) is set for each entry. The entry ID is calculated from the hash value of the key (matching rule).

The offload relay unit 508 refers to the FPGA FIB 5051 using the hash value calculated based on destination information (such as the Internet protocol (IP) address) of a packet targeted for processing and acquires an action to be performed on the corresponding packet. The offload relay unit 508 performs the action acquired from the FPGA FIB 5051 on the packet targeted for processing. The offload relay unit 508 functions as a fast path.

When the flow of the packet targeted for processing is not registered in the FPGA FIB 5051, the offload relay unit 508 inquires of the FPGA control unit 501 to cause the FPGA control unit 501 to resolve the destination.

The FPGA control unit 501 is achieved by a processor (not illustrated) of a computer constituting the virtual relay device 500 by executing a program.

The FPGA control unit 501 has functions as a control unit 506 and the software relay unit 507.

The software relay unit 507 includes a flow cache. The flow cache stores the result of destination resolution performed by the control unit 506. When an inquiry for the action for the flow of the packet is received from the FPGA 502, the software relay unit 507 refers to the flow cache. When the inquired flow is registered in the flow cache, the software relay unit 507 responds to the FPGA 502 with the corresponding action.

In the FPGA 502, the packet is forwarded using information on the received action. In addition, in the FPGA 502, the responded action is registered in the FPGA FIB 5051.

In the software relay unit 507 of the FPGA control unit 501, when the inquired flow is not registered in the flow cache, the control unit 506 determines the action (resolves the destination) based on the registration rule. The determined action is registered in the flow cache of the software relay unit 507 and also is responded to the FPGA 502. The software relay unit 507 functions as a slow path.

Japanese National Publication of International Patent Application No. 2020-502828, and Japanese Laid-open Patent Publication No. 2016-134876 are disclosed as related art.

SUMMARY

[TECHNICAL PROBLEM]

In order to age out the flow cache, the FPGA control unit 501 has to refer to hit information of the flow in the FPGA FIB 5051.

However, in such a hardware-offloaded prior virtual relay device, the FPGA control unit 501 (the control unit 506 and the software relay unit 507) achieved by software is not allowed to directly access the large-capacity memory 505 on the FPGA 502.

Therefore, the FPGA control unit 501 acquires the hit information in the FPGA FIB 5051 via indirect access using the register group 504.

However, such indirect access using the register group 504 has a large delay, and when the number of offloaded flows grows greater, the time taken for hit information confirmation processing for age-out becomes enormous.

When aging processing is performed by indirect access using the register group 504, for example, if it takes 40 $\mu$ seconds to age out one entry in the FPGA FIB 5051, it takes as much as about 1300 seconds for 32 million entries. Here, even if the usage rate of the FPGA FIB 5051 is 50%, it takes 600 seconds (10 minutes) or more, which is impractical.

One of the objects of the present embodiments is to reduce the time taken for acquiring hit information for performing aging.

[SOLUTION TO PROBLEM]

According to an aspect of the embodiments, an information processing device includes a field programmable gate array includes route information in flow control; and a forwarding processing unit that forwards packets according to the route information; one or more memories configured to store a flow cache that includes at least a part of the route information; and one or more processors configured to divide the route information into a plurality of division areas; and acquire hit information extracted from each of the entries in a first division area of the plurality of division areas to delete a part of entries of the flow cache stored in the one or more memories, the first division area including flows whose number is greater than a threshold value.

[ADVANTAGEOUS EFFECTS OF INVENTION]

According to one embodiment, the time taken for acquiring hit information for performing aging may be reduced.

BRIEF DESCRIPTION OF DRAWINGS

FIG. 1 is a diagram exemplarily illustrating a hardware configuration of an information processing device that achieves a function of a virtual router as an example of an embodiment;
FIG. 2 is a diagram illustrating a functional configuration of a virtual relay device as an example of the embodiment;
FIG. 3 is a diagram exemplarily illustrating an entry of an FIB in the virtual relay device as an example of the embodiment;
FIG. 4 is a diagram for explaining a management approach for the FIB in the virtual relay device as an example of the embodiment;
FIG. 5 is a diagram exemplarily illustrating a digest output instruction in the virtual relay device as an example of the embodiment;
FIG. 6 is a flowchart for explaining a process at the time of flow registration in a relay control unit of the virtual relay device as an example of the embodiment;
FIG. 7 is a flowchart for explaining a process at the time of flow deletion in the relay control unit of the virtual relay device as an example of the embodiment;
FIG. 8 is a flowchart for explaining a process of an offload flow hit information confirmation unit in the virtual relay device as an example of the embodiment;
FIG. 9 is a diagram illustrating a total time taken at the time of acquiring hit information by the virtual relay device as an example of the embodiment in comparison with a total time taken at the time of acquiring the hit information by each of approaches of indirect access only and digest output only; and
FIG. 10 is a diagram exemplarily illustrating a configuration of a prior hardware-offloaded virtual relay device.

DESCRIPTION OF EMBODIMENTS

In order to lessen the time taken for age-out processing in a virtual relay device that has been hardware-offloaded to the FPGA as illustrated in FIG. 10, it is conceivable to create digest information that summarizes only hit information of each entry of the FIB (FPGA FIB), inside the FPGA.

For example, the software relay unit of the FPGA control unit issues a digest information creation request to the FPGA, and the FPGA creates the digest information summarizing only the hit information of each entry of the FIB in response to this creation request. The FPGA forwards the created digest information to a memory area (host memory area) accessible from the FPGA control unit (software) via DMA.

Here, since the generation time for the digest information and the forwarding time for the generated digest information to the host memory area depend only on the total number of entries of the FIB, it is completed in a fixed time irrespective of the number of offload flows. In addition, since the access to the FIB is internal processing of the FPGA, it is also much faster than indirect access via registers from software.

However, in such an approach of creating the digest, it still takes time to generate the digest because all entries of the FPGA FIB are inspected regardless of the presence or absence of flow registration.

For example, when the number of registration flows of the FPGA FIB is small, the indirect access approach using registers is completed in a shorter time in some cases. In addition, the occurrence of avoidable access to an entry without registration in the FPGA FIB consumes memory bandwidth, and there is a possibility of degrading the packet relay performance during digest generation.

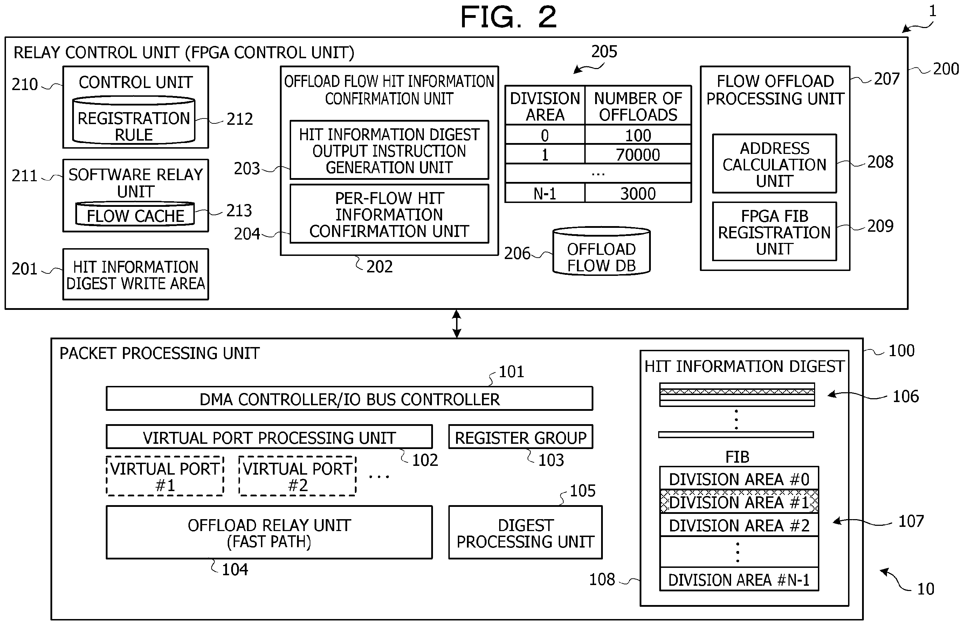

Thus, in a virtual relay device 1 (refer to FIG. 2) as an example of an embodiment, creation of a digest of hit information while reducing avoidable access to the FPGA FIB is achieved.

Hereinafter, embodiments relating to a relay device, a control method, and a control program will be described with reference to the drawings. Note that the embodiments to be described below are merely examples, and there is no intention to exclude application of various modifications and techniques not explicitly described in the embodiments. For example, the present embodiments may be variously modified and carried out without departing from the spirit thereof. Furthermore, each drawing is not intended to include only components illustrated in the drawing and may include another function and the like.

(A) Configuration

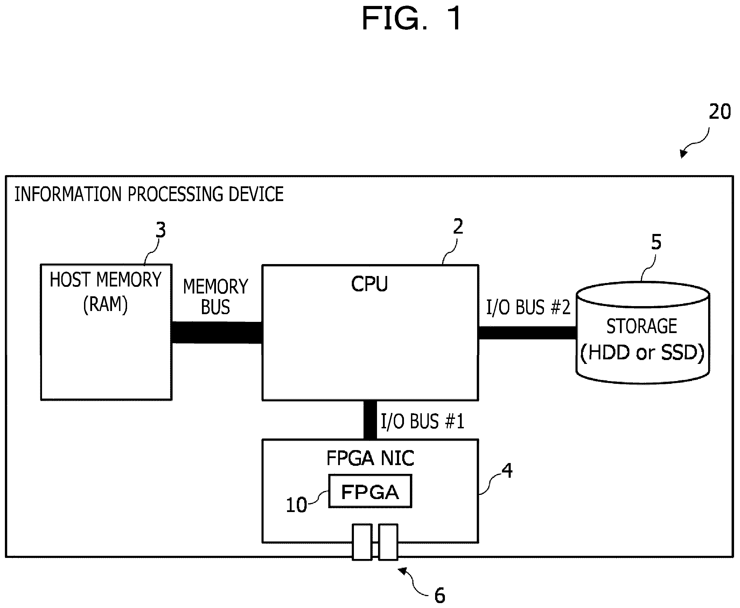

FIG. 1 is a diagram exemplarily illustrating a hardware configuration of an information processing device 20 that achieves a function of the virtual relay device 1 (refer to the reference sign 1 in FIG. 2) as an example of an embodiment.

The information processing device 20 may also be, for example, a computer having a server function. The information processing device 20 is configured to achieve a function as the virtual relay device (relay device) 1 and has a packet relay function.

The virtual relay device 1 may also be, for example, a virtual switch that achieves a function as a switch or may also be a virtual router that achieves a function as a router.

As exemplarily illustrated in FIG. 1, the information processing device 20 includes a central processing unit (CPU) 2, a host memory 3, an FPGA network interface card (NIC) 4, and a storage 5.

The host memory 3 and the CPU 2 are connected via a memory bus. In addition, the CPU 2 and the FPGA NIC 4 are connected via an input/output (I/O) bus #1, and the CPU 2 and the storage 5 are connected via an I/O bus #2, separately.

The CPU 2 is a processing device that performs various kinds of control and arithmetic operations and achieves various functions by executing an operating system (OS) and programs stored in the host memory 3. For example, the CPU 2 achieves a function as a relay control unit 200 (refer to FIG. 2) of the virtual relay device 1, which will be described later.

Note that a program (control program) for achieving functions as the relay control unit 200 is provided in a form recorded in a computer-readable recording medium, for example, a flexible disk, a compact disc (CD) (CD-read only memory (ROM), CD-recordable (R), CD-rewritable (RW), or the like), a digital versatile disc (DVD) (DVD-ROM, DVD-RAM, DVD-R, DVD+R, DVD-RW, DVD+RW, high definition (HD) DVD, or the like), a Blu-ray disc, a magnetic disk, an optical disc, a magneto-optical disk, or the like. Then, the computer reads the program from the recording medium to forward the program to an internal storage device or an external storage device and stores the program to use. In addition, for example, the program may also be recorded in a storage device (recording medium) such as a magnetic disk, an optical disc, or a magneto-optical disk and provided from the storage device to the computer via a communication route.

When the functions as the relay control unit 200 are achieved, the program stored in an internal storage device (the host memory 3 in the present embodiment) is executed by a microprocessor (the CPU 2 in the present embodiment) of the computer. At this time, the computer may also read and execute the program recorded in the recording medium.

The host memory 3 is a random access memory (RAM) used as a main storage device of the information processing device 20 and is used as a primary storage memory or a working memory. The host memory 3 temporarily stores at least a part of the OS and the application programs to be executed by the CPU 2. Furthermore, the host memory 3 stores various types of data involved in processing by the CPU 2. The application programs may also include the control program (not illustrated) executed by the CPU 2 in order for the information processing device 20 to achieve the functions as the relay control unit 200 of the virtual relay device 1 of the present embodiment.

The storage 5 is a storage device such as a hard disk drive (HDD), a solid state drive (SSD), or a storage class memory (SCM) and is configured to store various kinds of data.

The FPGA NIC 4 is an interface card prepared with an FPGA 10. The FPGA NIC 4 may also be referred to as a smart NIC 4.

The FPGA NIC 4 has a memory (not illustrated). The corresponding memory stores a program (configuration data) to be a base of a logic circuit in the FPGA 10.

The FPGA 10 is a device in which the circuit design of a digital circuit is electrically changeable. The FPGA 10 is a large scale integration circuit (LSI) having a great number of logical gates. The FPGA 10 functions as a predetermined logic circuit by writing configuration data describing a logical relationship and a connection relationship between logical gates, to a configuration RAM (not illustrated) included in the FPGA 10.

When the power of the FPGA 10 is turned on, a program file (bitstream data) is loaded in the FPGA 10 and loaded into a static random access memory (SRAM) (not illustrated) in the FPGA 10.

Each bit of the bitstream data loaded into the SRAM serves as an information source of a user circuit achieved on the FPGA 10, and a resource mounted in the FPGA 10 is customized to achieve a predetermined circuit. In the present information processing device 20, the FPGA 10 achieves some functions of the virtual relay device 1.

FIG. 2 is a diagram illustrating a functional configuration of the virtual relay device 1 as an example of the embodiment.

The virtual relay device 1 exemplarily illustrated in FIG. 2 includes the relay control unit 200 and a packet processing unit 100.

The packet processing unit 100 is configured to process a packet of the input flow and is achieved by the FPGA 10.

This means that, in the present virtual relay device 1, functions as the packet processing unit 100 are hardware-offloaded to the FPGA 10.

As illustrated in FIG. 2, the packet processing unit 100 (FPGA 10) includes a DMA controller/IO bus controller 101, a virtual port processing unit 102, a register group 103, an offload relay unit 104, a digest processing unit 105, and an FPGA memory 108.

The DMA controller/IO bus controller 101 achieves data forwarding with the host memory 3 by DMA. The DMA controller/IO bus controller 101 reads a hit information digest 106 created by the digest processing unit 105, which will be described later, from the FPGA memory 108 and stores the read hit information digest 106 in a predetermined storage area (hit information digest write area 201) of the host memory 3.

The virtual port processing unit 102 manages virtual ports that are forwarding sources and forwarding destinations of packets targeted for processing.

The register group 103 includes a plurality of registers. The registers store data and the like exchanged with the relay control unit 200 (CPU 2). For example, a first register of the register group 103 stores a digest output instruction output by a hit information digest output instruction generation unit 203, which will be described later. A second register of the register group 103 stores a hit information acquisition request output from a per-flow hit information confirmation unit 204, which will be described later. In addition, a third register of the register group 103 stores hit information (hit information confirmation response) created by the digest processing unit 105, which will be described later, in response to that hit information acquisition request.

The offload relay unit 104 processes, for example, a packet (a packet targeted for processing) received from a virtual machine (VM) (not illustrated) or the like with reference to an FIB 107. The offload relay unit 104 calculates a hash value based on, for example, the IP address and port number of the transmission source, the IP address and port number of the transmission destination, and the like in the flow of the packet that has been received and refers to the FIB 107 based on this calculated hash value. Consequently, an action to be performed on the packet targeted for processing is acquired. The offload relay unit 104 processes the packet in accordance with the acquired action.

In addition, when the flow of the packet that has been received is not registered in the FIB 107, the offload relay unit 104 inquires of the relay control unit 200 for the action to be performed on the corresponding flow and causes the relay control unit 200 to resolve the destination. The fact that the flow of the packet that has been received is not registered in the FIB 107 may also be referred to as a flow miss.

The FPGA memory 108 stores data generated by the FPGA 10 and information used by the FPGA 10.

The FIB 107 is formed in the FPGA memory 108. The FIB 107 is route information representing a relay rule to be referred to when the offload relay unit 104, which will be described later, forwards a packet. The FIB 107 is configured as, for example, a hash table reserved in a continuous area in the storage area of the FPGA memory 108. The FIB 107 may also be referred to as an FPGA FIB 107.

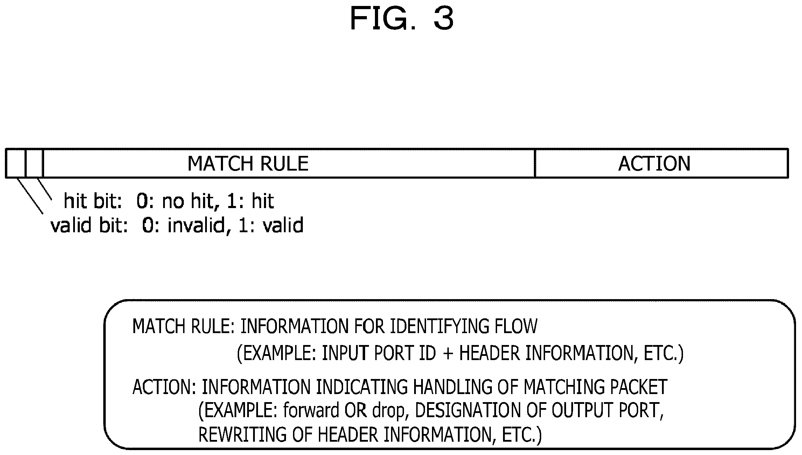

FIG. 3 is a diagram exemplarily illustrating an entry of the FIB 107 in the virtual relay device 1 as an example of the embodiment.

The entry of the FIB 107 exemplarily illustrated in FIG. 3 has a valid bit, a hit bit, a match rule, and an action, and an entry ID is set for this entry. The entry ID is generated (calculated) based on the hash value of the match rule.

The match rule is information for identifying the flow, and for example, a combination of the input port ID and the header information of the packet, or the like may also be used. The action is information indicating the handling of a packet that matches the match rule, in which, for example, forward or drop, designation of the output port, rewriting of header information, and the like are prescribed.

The valid bit is a value (flag) indicating whether the corresponding entry is valid or invalid, where, for example, 1 is set when the corresponding entry is valid, and 0 is set when the corresponding entry is invalid.

The hit bit is a value indicating whether or not the entry is accessed, where, for example, 1 is set when the entry is referred to (a hit is made), and 0 is set when the entry is not referred to (no hit is made). The hit bit value in the entry of the FIB 107 will be sometimes referred to as hit information.

Hereinafter, the flow registered in the FPGA FIB 107 will be sometimes referred to as an offload flow.

In addition, in the present virtual relay device 1, the area (continuous area) of the FIB 107 is divided into a plurality of areas (division areas) and managed.

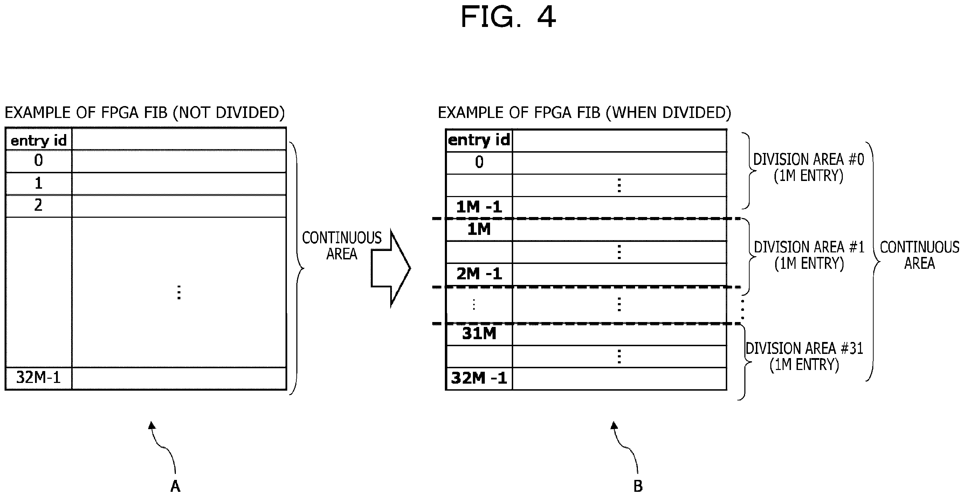

FIG. 4 is a diagram for explaining a management approach for the FIB 107 in the virtual relay device 1 as an example of the embodiment. In FIG. 4, the reference sign A indicates the FIB 107 before division, and the reference sign B indicates the FIB 107 in a divided state.

This FIG. 4 illustrates an example in which the FIB 107 with 32 million entries (refer to the reference sign A) is divided into 32 areas (division areas) each with one million entries (refer to the reference sign B) and managed.

In the present embodiment, the bit width of the registers of the register group 103 is assumed as, for example, 32 bits, and in line with this, the FIB 107 is divided into 32 areas of division areas #0 to #31 and managed.

In addition, the hit information digest 106 is stored in a predetermined storage area of the FPGA memory 108. The hit information digest 106 is information representing the hit information (hit bit) of each entry of the FPGA FIB 107 and is configured as a bit string in which a plurality of bits corresponding to each entry of the FPGA FIB 107 is arranged.

In the hit information digest 106, the hit information (hit bit) read from each entry of the FPGA FIB 107 by the digest processing unit 105, which will be described later, is registered at each corresponding bit position.

The digest processing unit 105 creates digest information about the FIB 107. The digest information is obtained by extracting only the hit bit values of the entries in the FIB 107 and arranging the extracted hit bit values in the order of the entry ID. By referring to this digest information, an area accessed in the FIB 107 may be grasped.

In addition, for the plurality of division areas constituting the FIB 107, the digest processing unit 105 is capable of creating the digest information in units of division areas.

Then, the digest processing unit 105 creates the digest information only for a division area for which the creation of the digest information is instructed in the digest output instruction created by the hit information digest output instruction generation unit 203, among the plurality of division areas constituting the FIB 107.

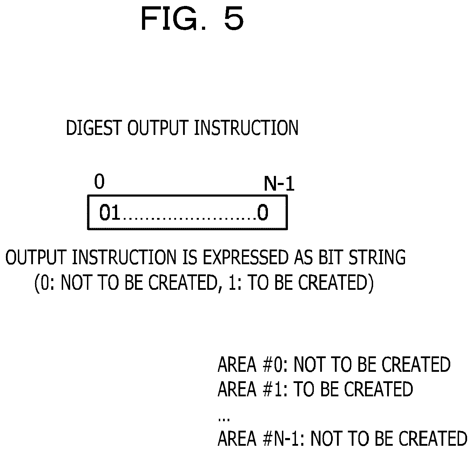

FIG. 5 is a diagram exemplarily illustrating the digest output instruction in the virtual relay device 1 as an example of the embodiment.

The digest output instruction is configured as a bit string in which the same number (N: N = 32 in the present embodiment) of bits as the number of division areas constituting the FPGA FIB 107 are arranged, and each bit corresponds to the division areas of the FIB 107 on a one-to-one basis.

In addition, the value of each bit in the digest output instruction represents whether or not the digest information is to be created for the corresponding division area, where, for example, 1 is set for a division area for which the digest information is to be created, and 0 is set for a division area for which the digest information is not to be created.

In the example illustrated in FIG. 5, it is indicated that the digest information is to be created for the division area #1, but the digest information is not to be created for the other division areas.

The digest processing unit 105 creates the digest information only for a division area for which 1 (to be created) is set in the digest output instruction, in accordance with the digest output instruction read from the first register of the register group.

The digest processing unit 105 accesses the FPGA FIB 107 only for a division area for which 1 (to be created) is set in the digest output instruction and extracts the hit information (hit bit) of each entry included in this division area. In the FPGA memory 108, the digest processing unit 105 stores the extracted hit information of each entry in the corresponding memory positions (areas) in the hit information digest 106. Note that the digest processing unit 105 sets zero (conducts zero padding) in a memory position in the hit information digest 106 corresponding to a division area for which 0 (not to be created) is set in the digest output instruction.

The digest processing unit 105 may also skip the process of creating the digest information for division areas for which 0 (not to be created) is set in the digest output instruction or alternatively, may also fill memory areas corresponding to these division areas in the hit information digest 106 with zeros.

In the hit information digest 106, the digest information is stored only in an area corresponding to a digest output division area.

The digest processing unit 105 writes a copy of the hit information digest 106 to the hit information digest write area 201 of the host memory 3 via the DMA controller/IO bus controller 101. The copy of the hit information digest 106 contains the digest information of all the areas of the FPGA FIB 107.

The relay control unit 200 is achieved by the CPU 2 of the information processing device 20 constituting the present virtual relay device 1 by executing a program.

As illustrated in FIG. 2, the relay control unit 200 has functions as a control unit 210, a software relay unit 211, the hit information digest write area 201, an offload flow hit information confirmation unit 202, an offload flow count management table 205, an offload flow database (DB) 206, and a flow offload processing unit 207.

The control unit 210 resolves the destination for the flow. The control unit 210 determines the action (resolves the destination) in accordance with a preset registration rule 212. The registration rule 212 may also be, for example, an ACL. In addition, the control unit 210 may also analyze destination information based on, for example, a border gateway protocol (BGP), which is a route control protocol.

The control unit 210 notifies the software relay unit 211 of information regarding the flow for which the destination has been resolved and causes the software relay unit 211 to register the information in a flow cache 213.

In addition, the control unit 210 performs aging on the flow cache 213 to delete (age out) entries for which hits have not been made for a certain period of time. When performing this aging, the control unit 210 refers to the hit information in each entry of the FPGA FIB 107.

The software relay unit 211 includes the flow cache 213. The flow cache 213 stores the result of destination resolution performed by the control unit 210. When an inquiry for the action for the flow of a packet is received from the packet processing unit 100, the software relay unit 211 refers to the flow cache 213. When the inquired flow is registered in the flow cache 213, the software relay unit 211 responds to the packet processing unit 100 with the corresponding action.

In the packet processing unit 100, the packet is forwarded using information on the received action. In addition, in the packet processing unit 100, the responded action is registered in the FIB 107.

In the software relay unit 211, when the inquired flow is not registered in the flow cache 213, the control unit 210 described above determines the action (resolves the destination) based on the registration rule 212. The determined action is registered in the flow cache 213 of the software relay unit 211 and also is responded to the packet processing unit 100. The software relay unit 211 functions as a slow path.

The hit information digest write area 201 is formed in a predetermined storage area in the host memory 3.

A copy of the hit information digest 106 is written to this hit information digest write area 201 by the digest processing unit 105 of the packet processing unit 100 via the DMA controller/IO bus controller 101.

The flow offload processing unit 207 manages the number of offload flows for each division area in the FIB 107. The number of offload flows denotes the number of flows (offload flows) set in the FPGA FIB 107.

The offload flow DB 206 manages information regarding the flows (offload flows) set in the FPGA FIB 107. By referring to this offload flow DB 206, the flows set in the FPGA FIB 107 may be grasped.

For example, the offload flow DB 206 manages the storage position of each flow (offload flow) in the FPGA FIB 107. This makes it easier to know in which division area in the FPGA FIB 107 each flow is stored.

The flow offload processing unit 207 manages the number of offload flows for each division area, using the offload flow count management table 205.

In the offload flow count management table 205 illustrated in FIG. 2, the number of offload flows is associated with the division area.

When a flow (offload flow) is registered in the FIB 107, the flow offload processing unit 207 increases (increments) the value of the number of offload flows of the corresponding division area by one. In addition, when an offload flow is deleted from the FIB 107, the flow offload processing unit 207 subtracts one from (decrements) the value of the number of offload flows of the corresponding division area.

The information constituting the offload flow count management table 205 is stored in, for example, a predetermined storage area of the host memory 3. In addition, the offload flow count management table 205 is updated by an address calculation unit 208, which will be described later.

Furthermore, the flow offload processing unit 207 manages the flows (offload flows) registered in the FPGA FIB 107, using the offload flow DB 206.

The offload flow DB 206, for example, manages information specifying the flow and information indicating the registration position of the flow in the FIB 107 in association with each other. The information indicating the registration position of the flow in the FIB 107 may also be, for example, the address and the division area number in the FPGA memory 108.

When an FPGA FIB registration unit 209, which will be described later, registers a flow in the FPGA FIB 107, the flow offload processing unit 207 registers the corresponding flow in the offload flow DB 206. In addition, when the FPGA FIB registration unit 209 deletes a flow from the FPGA FIB 107, the flow offload processing unit 207 deletes the flow from the offload flow DB 206.

The flow offload processing unit 207 has functions as the address calculation unit 208 and the FPGA FIB registration unit 209.

For a flow (a flow targeted for registration) in which a flow miss has been detected by the packet processing unit 100, the address calculation unit 208 performs arithmetic processing for registering information on the action responded by the control unit 210 or the software relay unit 211 in the FIB 107 of the packet processing unit 100.

The address calculation unit 208 calculates the registration entry position (address) in the FIB 107 from the hash value (CRC or the like) of the flow to be registered (registration flow). CRC is an abbreviation for cyclic redundancy check. The address calculation unit 208 may employ, for example, a remainder obtained by dividing the hash value of the registration flow by the total number of entries in the FIB 107 (the total number of FIB entries), as the registration entry position. Such a registration entry position is represented by following formula (1).

$$\text{Registration Entry Position} = \text{CRC32 (Flow) \& (Total Number of FIB Entries - 1) ... (1)}$$

In above formula (1), the sign '&' represents a bitwise AND. In addition, above formula (1) indicates a case where the total number of entries is two to the power of N.

The address calculation unit 208 calculates a division area in which the registration flow is to be stored in the FIB 107, from a value obtained by dividing the registration entry position calculated by above formula (1) by the number of entries in the division areas of the FIB 107. The number that specifies the division area is referred to as the division area number. The division area number is represented by following formula (2).

$$\text{Division Area Number} = \text{Registration Entry Position}/(\text{Number of Entries in Division Areas}) \ldots (2)$$

The address calculation unit 208 manages the number of offload flows for each division area, using the offload flow count management table 205. When a flow is registered in or deleted from the FIB 107, the address calculation unit 208 increments or decrements the value of the entry in the offload flow count management table 205 corresponding to the division area number calculated using above formula (2).

The FPGA FIB registration unit 209 registers the registration flow in the FPGA FIB 107. The FPGA FIB registration unit 209 stores information on the registration flow (the match rule, the action, and the like) in the registration entry position calculated by the address calculation unit 208.

The offload flow hit information confirmation unit 202 has functions as the hit information digest output instruction generation unit 203 and the per-flow hit information confirmation unit 204. The processing of the offload flow hit information confirmation unit 202 is repeatedly executed at regular intervals (for example, one minute intervals).

The hit information digest output instruction generation unit 203 verifies whether or not to cause the digest information to be output (created), based on the number of offload flows for each division area of the FPGA FIB 107. Then, the hit information digest output instruction generation unit 203 creates the digest output instruction in which this verification result is reflected. When causing the digest information to be output for at least one division area, the hit information digest output instruction generation unit 203 issues the digest output instruction to the packet processing unit 100 (FPGA 10).

The hit information digest output instruction generation unit 203 compares the number of offload flows in each division area in the offload flow count management table 205 with a threshold value (digest output verification threshold value). The number of offload flows in the offload flow count management table 205 may also be referred to as the number of registration flows.

When the number of offload flows exceeds the threshold value, the hit information digest output instruction generation unit 203 verifies that the digest information is to be output for the corresponding division area (digest output is to be made). In addition, when the number of offload flows is equal to or less than the threshold value, the hit information digest output instruction generation unit 203 verifies that the digest information of the division area is not to be output (no digest output is to be made).

The hit information digest output instruction generation unit 203 verifies whether or not to cause the digest information to be output, for all the division areas constituting the FIB 107 and creates the digest output instruction in which this verification result is reflected.

For example, as illustrated in FIG. 5, in a bit string containing bits in correspondence with the division areas, the hit information digest output instruction generation unit 203 sets 1 in correspondence with a division area for which the digest output is verified to be made and sets 0 in correspondence with a division area for which no digest output is verified to be made.

In the present virtual relay device 1, when the time taken for the software relay unit 211 to acquire the hit information of an entry of the FPGA FIB 107 via the third register of the register group 103 exceeds the time taken for creating the digest information of a division area of the FPGA FIB 107, the digest information regarding the corresponding division area is written in the hit information digest write area 201.

Hereinafter, the acquisition of the hit information of an entry of the FPGA FIB 107 via the third register of the register group 103 by the relay control unit 200 will be sometimes referred to as indirect access. In addition, the creation of the digest information of a division area of the FPGA FIB 107 and the output of the created digest information to the hit information digest write area 201 by the digest processing unit 105 will be sometimes referred to as digest output.

The number of offload flows satisfying inequality (3) indicated below may also be used as the digest output verification threshold value.

$$(\text{Time Taken for Indirect Access to Entry of FPGA FIB 107}) \times \text{Number of Offload Flows} > (\text{Time to Create Digest Information of Division Area}) \ldots (3)$$

Based on above inequality (3), the digest output verification threshold value can be represented by following inequality (4).

Digest Output Verification Threshold Value > (Time to Create Digest

Information of Division Area)/(Time Taken for Indirect Access to Entry of FPGA FIB 107)

... (4)

Here, as the time taken for the indirect access to an entry of the FPGA FIB 107, for example, the time measured in advance may also be set as a parameter at the time of starting up the control program of the present virtual relay device 1. In addition, the measurements may be taken at the time of starting up the control program of the present virtual relay device 1, and this measured value may also be automatically set.

Furthermore, as the time to create the digest information of a division area, a value obtained by dividing the time taken for generating the digest of the entire FPGA FIB 107 by the number of divisions (total number of division areas) of the FPGA FIB 107 may also be used. Note that the time taken for generating the digest of the entire FPGA FIB 107 may also be measured in advance similarly to the time taken for the indirect access, or may also be automatically measured at the time of initialization of the present virtual relay device 1, and may be changed and carried out as appropriate.

A division area in which the number of offload flows is greater than the digest output verification threshold value may also be referred to as a digest output division area. In addition, a division area in which the number of offload flows is equal to or less than the digest output verification threshold value may also be referred to as an indirect access division area.

The hit information digest output instruction generation unit 203 creates the digest output instruction (refer to FIG. 5) that the digest processing unit 105 of the packet processing unit 100 is to be notified of.

In a bit string (digest output instruction) in which a plurality of (N: N = 32 in the present embodiment) bits corresponding to a plurality of (N) division areas constituting the FIB 107 is arranged, the hit information digest output instruction generation unit 203 sets 1 in a bit corresponding to a division area for which the digest information has been determined to be created. In addition, in the corresponding bit string, the hit information digest output instruction generation unit 203 sets 0 in a bit corresponding to a division area for which the digest information is determined not to be created.

The hit information digest output instruction generation unit 203 stores the created digest output instruction in the first register of the register group 103 of the FPGA 10.

After the output of the digest information by the digest processing unit 105 of the packet processing unit 100 is completed, the per-flow hit information confirmation unit 204 confirms the hit information (hit bit) in the entry of the FPGA FIB 107 individually for all the offload flows registered in the offload flow DB.

In addition, when confirming the hit information (hit bit) in the entry of the FPGA FIB 107, the per-flow hit information confirmation unit 204 refers to the digest output instruction created by the hit information digest output instruction generation unit 203 to determine the method of confirming the hit information for each flow.

The per-flow hit information confirmation unit 204 refers to the offload flow DB 206 to specify division areas in which each flow is stored in the FPGA FIB 107.

Then, the per-flow hit information confirmation unit 204 refers to the digest output instruction and, for a division area in which the flow targeted for processing is stored, confirms whether 1 is set (to be created) or 0 is set (not to be created) in the digest output instruction.

The digest information has been created by the digest processing unit 105 for a division area for which 1 is set in the digest output instruction, and the created digest information has been stored in the hit information digest write area 201. Thus, for a flow registered in a division area for which 1 is set in the digest output instruction in this manner, the per-flow hit information confirmation unit 204 reads and confirms the digest information stored in the hit information digest write area 201.

On the other hand, for a division area for which 0 is set in the digest output instruction, the digest information has not been created by the digest processing unit 105. Thus, for a flow registered in a division area for which 0 is set in the digest output instruction in this manner, the per-flow hit information confirmation unit 204 issues a hit information acquisition request to the second register of the register group 103 for each flow and reads and confirms a hit information confirmation response stored in the third register of the register group 103 in response to the hit information acquisition request. For example, for a flow registered in a division area for which 0 is set in the digest output instruction, the per-flow hit information confirmation unit 204 acquires the hit information via the second and third registers of the register group 103 of the FPGA 10.

(B) Operation

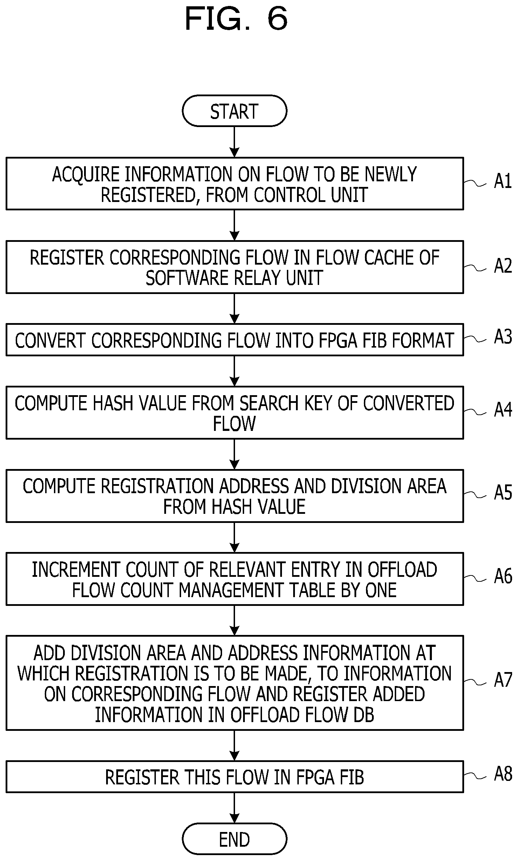

A process at the time of registering a flow in the relay control unit 200 of the virtual relay device 1 as an example of the embodiment configured as described above will be described with reference to the flowchart (steps A1 to A8) illustrated in FIG. 6.

In step A1, the software relay unit 211 acquires information (flow information) on a flow to be newly registered, from the control unit 210.

In step A2, the software relay unit 211 registers the corresponding flow to be newly registered, in the flow cache 213.

In step A3, the software relay unit 211 converts the flow into a format registerable in the FPGA FIB 107.

In step A4, the software relay unit 211 computes the hash value from the search key of the converted flow.

In step A5, the software relay unit 211 calculates the registration address and the division area from the hash value calculated in step A4.

In step A6, the software relay unit 211 increments the number of counts in the offload flow count management table 205 by one for the number of offloads corresponding to the division area determined in step A5.

In step A7, the software relay unit 211 adds the division area and address information in the FPGA FIB 107 in which the corresponding flow is to be registered, to the information (flow information) on the corresponding flow to be newly registered and registers the added information in the offload flow DB 206.

In step A8, the flow is registered in the FPGA FIB 107, and the process is ended.

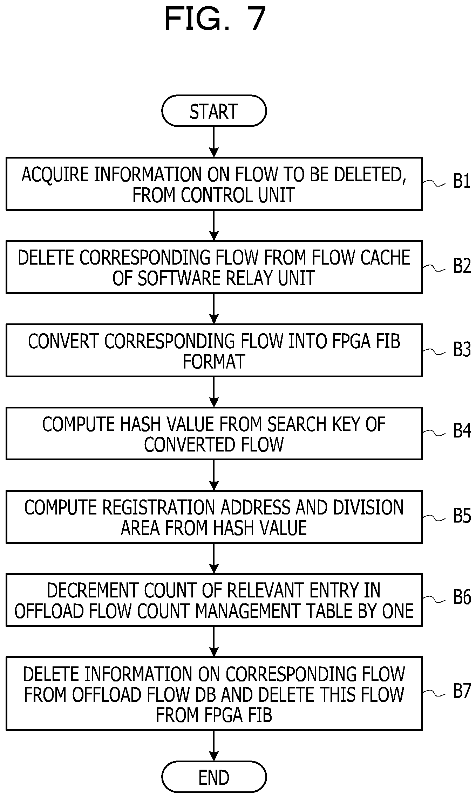

Next, a process at the time of deleting a flow in the relay control unit 200 of the virtual relay device 1 as an example of the embodiment will be described with reference to the flowchart (steps B1 to B7) illustrated in FIG. 7.

In step B1, the software relay unit 211 acquires the flow information on a flow to be deleted, from the control unit 210.

In step B2, the software relay unit 211 deletes the corresponding flow to be deleted, from the flow cache 213.

In step B3, the software relay unit 211 converts the flow into a format registerable in the FPGA FIB 107.

In step B4, the software relay unit 211 computes the hash value from the search key of the converted flow.

In step B5, the software relay unit 211 calculates the registration address and the division area from the hash value calculated in step B4.

In step B6, the software relay unit 211 decrements the number of counts in the offload flow count management table 205 by one for the number of offloads corresponding to the division area determined in step B5.

In step B7, the software relay unit 211 deletes the flow information on the corresponding flow to be deleted, from the offload flow DB 206. In addition, the software relay unit 211 deletes the flow from the FPGA FIB 107 and ends the process.

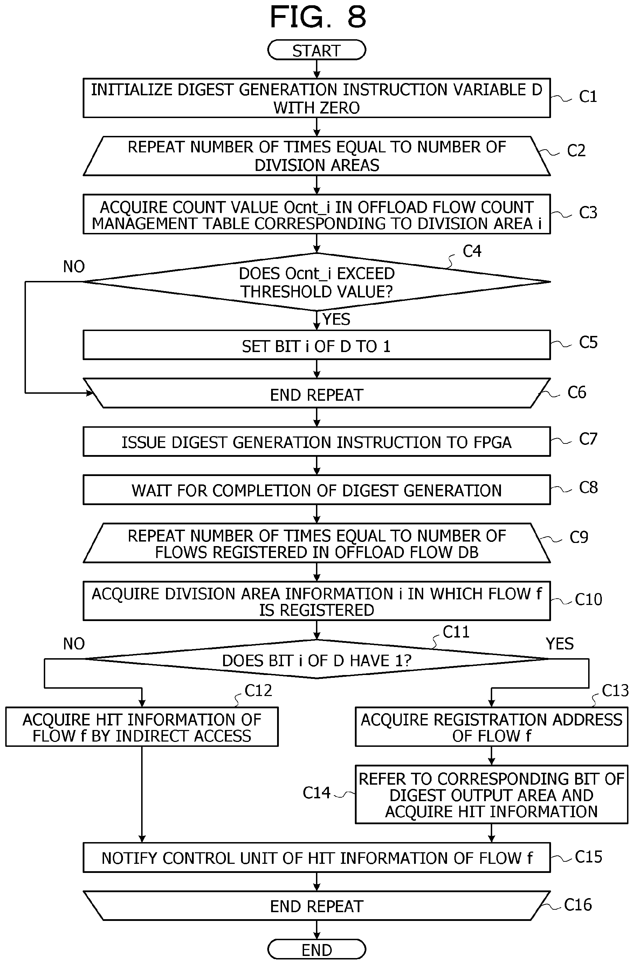

Next, a process of the offload flow hit information confirmation unit 202 in the virtual relay device 1 as an example of the embodiment will be described with reference to the flowchart (steps C1 to C16) illustrated in FIG. 8.

In step C1, the hit information digest output instruction generation unit 203 initializes a variable D used for the digest output instruction with zero. The variable D is a bit string in which the same number (N: N = 32 in the present embodiment) of bits as the number of division areas constituting the FPGA FIB 107 are arranged, and the corresponding bit string is prepared in correspondence with the division areas constituting the FPGA FIB 107. For example, an i-th bit (bit i) in the variable D corresponds to a division area #i. The variable D may also be referred to as a bit string D.

In step C2, a loop process for repeatedly carrying out the control up to step C6 is started for all the division areas existing in the FPGA FIB 107.

In step C3, the hit information digest output instruction generation unit 203 acquires the number of offload flows (Ocnt_i) in the offload flow count management table 205 corresponding to the division area i.

In step C4, the hit information digest output instruction generation unit 203 confirms whether the number of offload flows (Ocnt_i) corresponding to the division area i exceeds the threshold value (digest output verification threshold value). When the number of offload flows (Ocnt_i) corresponding the division area i does not exceed the threshold value as a result of the confirmation (refer to the NO route in step C4), the process proceeds to step C6.

On the other hand, as a result of the confirmation in step C4, when the number of offload flows (Ocnt_i) corresponding to the division area i exceeds the threshold value (refer to the YES route in step C4), the process proceeds to step C5.

In step C5, the hit information digest output instruction generation unit 203 sets 1 in the bit i in the variable D. Thereafter, the process proceeds to step C6.

In step C6, a loop end process corresponding to step C2 is carried out. Here, when the process for all the division areas is completed, the control advances to step C7.

In step C7, the hit information digest output instruction generation unit 203 issues the variable D to the FPGA 10 as a digest output instruction. The issued digest output instruction is stored in the first register of the register group 103.

In step C8, the offload flow hit information confirmation unit 202 waits until a notification of the completion of the digest generation from the FPGA 10 is acknowledged. When a notification of the completion of the digest generation from the FPGA 10 is acknowledged, the process proceeds to step C9.

In step C9, a loop process for repeatedly carrying out control up to step C16 is started for all the flows (offload flows) registered in the offload flow DB 206. The flow registered in the offload flow DB 206 is represented by the reference sign f.

In step C10, the per-flow hit information confirmation unit 204 acquires information on the division area i in which the flow f is registered, from the offload flow DB 206.

In step C11, the per-flow hit information confirmation unit 204 confirms whether the bit i in the digest output instruction (bit string D) has 1. As a result of the confirmation, when the bit i has 0 (refer to the NO route in step C11), the process proceeds to step C12.

In step C12, the per-flow hit information confirmation unit 204 acquires the hit information of the entry of the FPGA FIB 107 via the third register of the register group 103 by the indirect access. For example, the per-flow hit information confirmation unit 204 reads and acquires the hit information (hit information confirmation response) stored in the third register of the register group 103. Thereafter, the process proceeds to step C15.

On the other hand, when the bit i has 1 as a result of the confirmation in step C11 (refer to the YES route in step C11), the process proceeds to step C13.

In step C13, the per-flow hit information confirmation unit 204 refers to the offload flow DB 206 to acquire the address where the flow f is registered in the FPGA FIB 107.

In step C14, the per-flow hit information confirmation unit 204 acquires the hit information corresponding to the address where the flow f is registered, from the copy of the hit information digest 106 stored in the hit information digest write area 201. Thereafter, the process proceeds to step C15.

In step C15, the per-flow hit information confirmation unit 204 notifies the control unit 210 of the hit information of the flow f. Based on this hit information, the hit status of each entry of the FPGA FIB 107 is grasped, and aging is performed to delete (age out) an entry for which a hit has not been made for a certain period of time.

In step C16, a loop end process corresponding to step C9 is carried out. Here, when the process for all the flows (offload flows) registered in the offload flow DB 206 is completed, the process is ended.

(C) Effects

As described above, according to the virtual relay device 1 as an example of the embodiment, the FPGA FIB 107 is divided into a plurality of areas (division areas), and the number of offload flows is managed for each division area, using the offload flow count management table 205. Then, the hit information digest output instruction generation unit 203 switches between the indirect access and the digest output according to the number of offload flows for each division area to acquire the hit information in the FPGA FIB 107. This enables the reduction of the time taken for acquiring the hit information for performing aging.

For a division area (digest output division area) in which the number of offload flows is greater than the digest output verification threshold value, the hit information digest output instruction generation unit 203 causes the digest information to be created with the digest output instruction to the FPGA 10 (packet processing unit 100).

In the packet processing unit 100 (FPGA 10), the digest processing unit 105 refers to the digest output instruction to create the digest information only for the digest output division area and registers the created digest information in the corresponding location in the hit information digest 106.

A copy of the hit information digest 106 created in this manner is stored in the hit information digest write area 201 of the host memory 3 via the DMA controller/IO bus controller 101.

This allows the per-flow hit information confirmation unit 204, in the relay control unit 200, to acquire the hit information of the flow stored in the digest output division area from the copy of the hit information digest 106 stored in the hit information digest write area 201. Since the hit information digest write area 201 is formed in the host memory 3, the per-flow hit information confirmation unit 204, which inclusively means the control unit 210, may reduce the time involved in acquiring the hit information of the flow stored in the digest output division area.

In addition, at this time, since the digest processing unit 105 creates the digest information only for the digest output division area of the FPGA FIB 107, the access to the FPGA FIB 107 for creating the hit information may be reduced. This may suppress a degradation in lookup performance during acquisition of the hit information.

In addition, for the division area (indirect access division area) in which the number of offload flows is equal to or less than the digest output verification threshold value, the per-flow hit information confirmation unit 204 acquires the hit information of the entry of the FPGA FIB 107 by the indirect access via the third register of the register group 103. For example, the per-flow hit information confirmation unit 204 reads and acquires the hit information (hit information confirmation response) stored in the third register of the register group 103.

The time taken for this acquisition of the hit information of the entry of the FPGA FIB 107 by the indirect access via the register increases according to the number of offload flows targeted for acquisition. In the present virtual relay device 1, since the per-flow hit information confirmation unit 204 performs the acquisition for a division area in which the number of offload flows is equal to or less than the digest output verification threshold value, the per-flow hit information confirmation unit 204, which inclusively means the control unit 210, may reduce the time involved in acquiring the hit information for the indirect access division area.

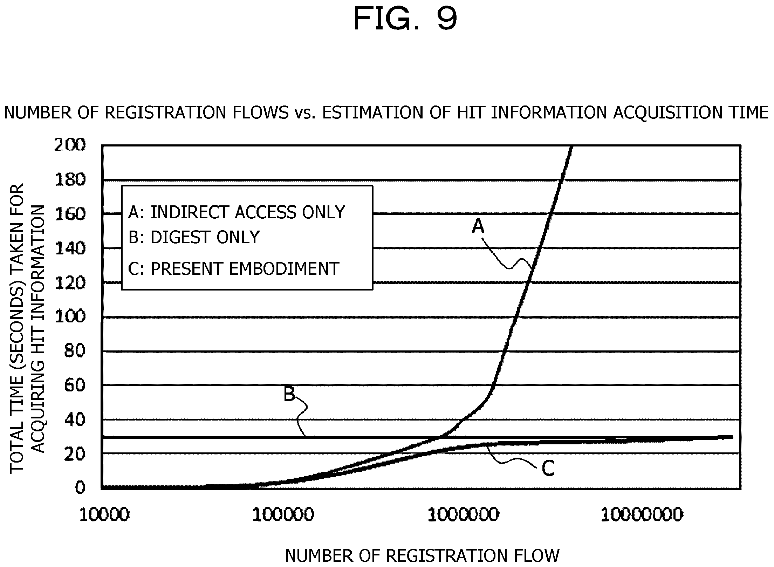

FIG. 9 is a diagram illustrating a total time taken at the time of acquiring the hit information by the virtual relay device 1 as an example of the embodiment in comparison with a total time taken at the time of acquiring the hit information by each of approaches of the indirect access (prior approach) only and the digest output only.

In this FIG. 9, a simulation result of the relationship between the number of registration flows and the hit information acquisition time is illustrated as a graph, where the horizontal axis indicates the number of registration flows (number of offload flows) in the FPGA FIB 107, and the vertical axis indicates the total time taken at the time of acquiring the hit information.

In FIG. 9, the reference sign A indicates a case where the hit information is acquired only by the indirect access via the register, and it can be seen that the time taken for acquiring the hit information increases according to the number of registration flows. In addition, the reference sign B indicates a case where the hit information is acquired only by the digest output, and it can be seen that the time taken for acquiring the hit information is unvaried regardless of the number of registration flows. The reference sign C indicates the result by the present virtual relay device 1, and it can be seen that the hit information may be acquired in a shorter time than both of the approach only by the indirect access and the approach only by the digest output, regardless of the number of registration flows.

According to the present virtual relay device 1, even in terms of the maximum time taken for acquiring the hit information, the hit information may be acquired in a shorter time than the time taken only by the digest output.

(D) Others

Each configuration and each process of the present embodiments may be selected or omitted as needed or may also be appropriately combined.

Then, the disclosed technique is not limited to the embodiments described above, and various modifications may be made and carried out without departing from the spirit of the present embodiments.

Furthermore, the present embodiments may be carried out and manufactured by those skilled in the art according to the disclosure described above.

**Claims**

1. An information processing device comprising:

   a field programmable gate array includes:

   route information in flow control; and
   a forwarding processing unit that forwards packets according to the route information;

   one or more memories configured to store a flow cache that includes at least a part of the route information; and
   one or more processors configured to:

   divide the route information into a plurality of division areas; and
   acquire hit information extracted from each of the entries in a first division area of the plurality of division areas to delete a part of entries of the flow cache stored in the one or more memories, the first division area including flows whose number is greater than a threshold value.

2. The information processing device according to claim 1, wherein the one or more processors are further configured to

   create a digest output instruction that instructs creation of digest information indicating a summary of the hit information extracted from each of the plurality of the entries included in the first division area,
   wherein the field programmable gate array further

   create the digest information in response to the digest output instruction, and
   forward the created digest information to the one or more memories by direct memory access.

3. The information processing device according to claim 2, wherein
   the threshold value is determined based on a value obtained by dividing a time period to create the digest information of the division areas by a time period to acquire the hit information extracted from each of the entries of a second division area including flows whose number is equal to or less than the threshold value stored in a register of the field programmable gate array.

4. The information processing device according to claim 3, wherein the one or more processors are further configured to acquire the hit information extracted from the second division area via the register for each of the entries to delete a part of entries of the flow cache stored in the one or more memories.

5. A control method for a computer to execute a process comprising:

causing a field programmable gate array to forward packets according to route information in flow control;
dividing the route information into a plurality of division areas; and
acquiring hit information extracted from each of the entries in a first division area of the plurality of division areas to delete a part of entries of flow cache including at least a part of the route information, the first division area including flows whose number is greater than a threshold value.

6. The control method according to claim 5, wherein the process further comprising
causing the field programmable gate array to:

create digest information indicating a summary of the hit information extracted from each of the plurality of the entries included in the first division area, and
forward the created digest information to one or more memories by direct memory access.

7. The control method according to claim 6, wherein
the threshold value is determined based on a value obtained by dividing a time period to create the digest information of the division areas by a time period to acquire the hit information extracted from each of the entries of a second division area including flows whose number is equal to or less than the threshold value stored in a register of the field programmable gate array.

8. The control method according to claim 7, wherein the process further comprising acquiring the hit information extracted from the second division area via the register for each of the entries to delete a part of entries of the flow cache.

9. A control program that causes at least one computer to execute a process, the process comprising:

causing a field programmable gate array to forward packets according to route information in flow control;
dividing the route information into a plurality of division areas; and
acquiring hit information extracted from each of the entries in a first division area of the plurality of division areas to delete a part of entries of flow cache including at least a part of the route information, the first division area including flows whose number is greater than a threshold value.

10. The control program according to claim 9, wherein the process further comprising
causing the field programmable gate array to:

create digest information indicating a summary of the hit information extracted from each of the plurality of the entries included in the first division area, and
forward the created digest information to one or more memories by direct memory access.

11. The control program according to claim 10, wherein
the threshold value is determined based on a value obtained by dividing a time period to create the digest information of the division areas by a time period to acquire the hit information extracted from each of the entries of a second division area including flows whose number is equal to or less than the threshold value stored in a register of the field programmable gate array.

12. The control program according to claim 11, wherein the process further comprising
acquiring the hit information extracted from the second division area via the register for each of the entries to delete a part of entries of the flow cache.

# FIG. 1

INFORMATION PROCESSING DEVICE

HOST MEMORY (RAM) — 3

MEMORY BUS

CPU — 2

I/O BUS #2

STORAGE (HDD or SSD) — 5

I/O BUS #1

FPGA NIC — 4

FPGA — 10

6

20

EP 4 113 948 A1

# FIG. 2

**RELAY CONTROL UNIT (FPGA CONTROL UNIT)** — 200

210 — **CONTROL UNIT**
　　　**REGISTRATION RULE** — 212

211 — **SOFTWARE RELAY UNIT**
　　　**FLOW CACHE** — 213

201 — **HIT INFORMATION DIGEST WRITE AREA**

**OFFLOAD FLOW HIT INFORMATION CONFIRMATION UNIT**
203 — **HIT INFORMATION DIGEST OUTPUT INSTRUCTION GENERATION UNIT**
204 — **PER-FLOW HIT INFORMATION CONFIRMATION UNIT**
— 202

205

| DIVISION AREA | NUMBER OF OFFLOADS |
|---|---|
| 0 | 100 |
| 1 | 70000 |
| ... | |
| N-1 | 3000 |

206 — **OFFLOAD FLOW DB**

**FLOW OFFLOAD PROCESSING UNIT** — 207
**ADDRESS CALCULATION UNIT** — 208
**FPGA FIB REGISTRATION UNIT** — 209

---

**PACKET PROCESSING UNIT** — 100

101 — **DMA CONTROLLER/IO BUS CONTROLLER**

**VIRTUAL PORT PROCESSING UNIT** — 102
**VIRTUAL PORT #1**　**VIRTUAL PORT #2** ...

**REGISTER GROUP** — 103

**OFFLOAD RELAY UNIT (FAST PATH)** — 104

**DIGEST PROCESSING UNIT** — 105

**HIT INFORMATION DIGEST**
— 106
— 107

**FIB**
| DIVISION AREA #0 |
| DIVISION AREA #1 |
| DIVISION AREA #2 |
| ⋮ |
| DIVISION AREA #N-1 |

108 —

10
1

EP 4 113 948 A1

# FIG. 3

| | MATCH RULE | ACTION |
|---|---|---|

hit bit:  0: no hit, 1: hit
valid bit:  0: invalid, 1: valid

MATCH RULE: INFORMATION FOR IDENTIFYING FLOW
        (EXAMPLE: INPUT PORT ID + HEADER INFORMATION, ETC.)

ACTION: INFORMATION INDICATING HANDLING OF MATCHING PACKET
        (EXAMPLE: forward OR drop, DESIGNATION OF OUTPUT PORT,
        REWRITING OF HEADER INFORMATION, ETC.)

EP 4 113 948 A1

# FIG. 4

EP 4 113 948 A1

EXAMPLE OF FPGA FIB (NOT DIVIDED)

| entry id | |
|---|---|
| 0 | |
| 1 | |
| 2 | |
| | ⋮ |
| 32M-1 | |

} CONTINUOUS AREA

⇨

EXAMPLE OF FPGA FIB (WHEN DIVIDED)

| entry id | |
|---|---|
| 0 | |
| | ⋮ |
| 1M -1 | |
| 1M | |
| | ⋮ |
| 2M -1 | |
| ⋮ | ⋮ |
| 31M | |
| | ⋮ |
| 32M -1 | |

} DIVISION AREA #0 (1M ENTRY)

} DIVISION AREA #1 (1M ENTRY)

⋮

} DIVISION AREA #31 (1M ENTRY)

} CONTINUOUS AREA

A

B

# FIG. 5

DIGEST OUTPUT INSTRUCTION

```
0                    N-1
┌──────────────────────┐
│ 01.................0  │
└──────────────────────┘
```

OUTPUT INSTRUCTION IS EXPRESSED AS BIT STRING
(0: NOT TO BE CREATED, 1: TO BE CREATED)

AREA #0: NOT TO BE CREATED
AREA #1: TO BE CREATED
...
AREA #N-1: NOT TO BE CREATED

# FIG. 6

START

ACQUIRE INFORMATION ON FLOW TO BE NEWLY REGISTERED, FROM CONTROL UNIT — A1

REGISTER CORRESPONDING FLOW IN FLOW CACHE OF SOFTWARE RELAY UNIT — A2

CONVERT CORRESPONDING FLOW INTO FPGA FIB FORMAT — A3

COMPUTE HASH VALUE FROM SEARCH KEY OF CONVERTED FLOW — A4

COMPUTE REGISTRATION ADDRESS AND DIVISION AREA FROM HASH VALUE — A5

INCREMENT COUNT OF RELEVANT ENTRY IN OFFLOAD FLOW COUNT MANAGEMENT TABLE BY ONE — A6

ADD DIVISION AREA AND ADDRESS INFORMATION AT WHICH REGISTRATION IS TO BE MADE, TO INFORMATION ON CORRESPONDING FLOW AND REGISTER ADDED INFORMATION IN OFFLOAD FLOW DB — A7

REGISTER THIS FLOW IN FPGA FIB — A8

END

# FIG. 7

START

ACQUIRE INFORMATION ON FLOW TO BE DELETED, FROM CONTROL UNIT — B1

DELETE CORRESPONDING FLOW FROM FLOW CACHE OF SOFTWARE RELAY UNIT — B2

CONVERT CORRESPONDING FLOW INTO FPGA FIB FORMAT — B3

COMPUTE HASH VALUE FROM SEARCH KEY OF CONVERTED FLOW — B4

COMPUTE REGISTRATION ADDRESS AND DIVISION AREA FROM HASH VALUE — B5

DECREMENT COUNT OF RELEVANT ENTRY IN OFFLOAD FLOW COUNT MANAGEMENT TABLE BY ONE — B6

DELETE INFORMATION ON CORRESPONDING FLOW FROM OFFLOAD FLOW DB AND DELETE THIS FLOW FROM FPGA FIB — B7

END

# FIG. 8

START

| INITIALIZE DIGEST GENERATION INSTRUCTION VARIABLE D WITH ZERO | C1 |

| REPEAT NUMBER OF TIMES EQUAL TO NUMBER OF DIVISION AREAS | C2 |

| ACQUIRE COUNT VALUE Ocnt_i IN OFFLOAD FLOW COUNT MANAGEMENT TABLE CORRESPONDING TO DIVISION AREA i | C3 |

C4

DOES Ocnt_i EXCEED THRESHOLD VALUE?

NO

YES

| SET BIT i OF D TO 1 | C5 |

| END REPEAT | C6 |

| ISSUE DIGEST GENERATION INSTRUCTION TO FPGA | C7 |

| WAIT FOR COMPLETION OF DIGEST GENERATION | C8 |

| REPEAT NUMBER OF TIMES EQUAL TO NUMBER OF FLOWS REGISTERED IN OFFLOAD FLOW DB | C9 |

| ACQUIRE DIVISION AREA INFORMATION i IN WHICH FLOW f IS REGISTERED | C10 |

C11

DOES BIT i OF D HAVE 1?

NO

YES

| ACQUIRE HIT INFORMATION OF FLOW f BY INDIRECT ACCESS | C12 |

| ACQUIRE REGISTRATION ADDRESS OF FLOW f | C13 |

| REFER TO CORRESPONDING BIT OF DIGEST OUTPUT AREA AND ACQUIRE HIT INFORMATION | C14 |

| NOTIFY CONTROL UNIT OF HIT INFORMATION OF FLOW f | C15 |

| END REPEAT | C16 |

END

# FIG. 9

NUMBER OF REGISTRATION FLOWS vs. ESTIMATION OF HIT INFORMATION ACQUISITION TIME

A: INDIRECT ACCESS ONLY
B: DIGEST ONLY
C: PRESENT EMBODIMENT

NUMBER OF REGISTRATION FLOW

TOTAL TIME (SECONDS) TAKEN FOR ACQUIRING HIT INFORMATION

# FIG. 10

*500*

**FPGA CONTROL UNIT** *501*

CONTROL UNIT — *506* REGISTRATION RULE (SUCH AS ACL)

SOFTWARE RELAY UNIT (slow path) — FLOW CACHE — *507*

FLOW OFFLOAD

**FPGA** *502*

*503* DMA

*504* REGISTER GROUP

OFFLOAD RELAY UNIT (fast path) *508*

LARGE-CAPACITY MEMORY

FIB *5051*

*505*

ENTRY FLAG FIELD

### EXAMPLE OF FPGA FIB

| entry id | | | |
|----------|--|--------------|----------|
| 0 | | MATCH RULE 0 | ACTION 0 |
| 1 | | MATCH RULE 1 | ACTION 1 |
| 2 | | MATCH RULE 2 | ACTION 2 |
| ⋮ | | | |
| N | | MATCH RULE N | ACTION N |

CONTINUOUS AREA

EP 4 113 948 A1

Europäisches
Patentamt

European
Patent Office

Office européen
des brevets

# EUROPEAN SEARCH REPORT

Application Number

EP 22 17 0236

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/167318 A1 (SRINIVASAN ARVIND [US] ET AL) 14 June 2018 (2018-06-14) | 1,5,9 | INV. H04L45/00 |
| A | * paragraph [0007]; figure 1 * * paragraph [0027] – paragraph [0030] * * paragraph [0036] – paragraph [0039] * * paragraph [0044] – paragraph [0050] * * paragraph [0056] * * paragraph [0067] – paragraph [0068] * ----- | 2-4,6-8, 10-12 | H04L45/74 H04L45/745 H04L49/00 |
| A | US 2019/280980 A1 (HYOUDOU KAZUKI [JP]) 12 September 2019 (2019-09-12) * paragraph [0005] – paragraph [0012]; figure 1 * * paragraph [0036] – paragraph [0043] * * paragraph [0081] * ----- | 1-12 | |
| A | US 2018/083876 A1 (SHARMA PRASHANT [US] ET AL) 22 March 2018 (2018-03-22) * paragraph [0044] – paragraph [0054]; figure 1 * ----- | 1-12 | |

TECHNICAL FIELDS
SEARCHED (IPC)

H04L

The present search report has been drawn up for all claims

| Place of search | Date of completion of the search | Examiner |
|---|---|---|
| The Hague | 27 September 2022 | Tortelli, Michele |

EPO FORM 1503 03.82 (P04C01)

## ANNEX TO THE EUROPEAN SEARCH REPORT
## ON EUROPEAN PATENT APPLICATION NO.

EP 22 17 0236

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2022

| Patent document cited in search report | | Publication date | Patent family member(s) | | Publication date |
|---|---|---|---|---|---|
| US 2018167318 | A1 | 14-06-2018 | CN | 108781184 A | 09-11-2018 |
| | | | EP | 3476088 A1 | 01-05-2019 |
| | | | JP | 7100586 B2 | 13-07-2022 |
| | | | JP | 2020502828 A | 23-01-2020 |
| | | | US | 2018167318 A1 | 14-06-2018 |
| | | | WO | 2018111473 A1 | 21-06-2018 |
| US 2019280980 | A1 | 12-09-2019 | JP | 6958440 B2 | 02-11-2021 |
| | | | JP | 2019161319 A | 19-09-2019 |
| | | | US | 2019280980 A1 | 12-09-2019 |
| US 2018083876 | A1 | 22-03-2018 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020502828 A

- JP 2016134876 A